Europäisches Patentamt

European Patent Office

Office européen des brevets

(19)

(11) **EP 1 410 865 A2**

(12) **EUROPEAN PATENT APPLICATION**

(43) Date of publication:
   **21.04.2004 Bulletin 2004/17**

(51) Int Cl.$^7$: **B23H 1/02**, B23H 7/04

(21) Application number: **03256471.8**

(22) Date of filing: **14.10.2003**

(84) Designated Contracting States:
   **AT BE BG CH CY CZ DE DK EE ES FI FR GB GR
   HU IE IT LI LU MC NL PT RO SE SI SK TR**
   Designated Extension States:
   **AL LT LV MK**

(30) Priority: **18.10.2002 JP 2002303973**

(71) Applicant: **Fanuc Ltd.
   Minamitsuru-gun, Yamanashi, 401-0597 (JP)**

(72) Inventors:
   • **Murai, Masao
      Room 10-103 FANUC Manshonharimomi
      Minamitsuru-gun Yamanashi 401-0511 (JP)**

   • **Kawahara, Akiyoshi
      R.6-110 FANUC Manshonharimomi
      Minamitsuru-gun Yamanashi 401-0511 (JP)**
   • **Sakurai, Akihiro Room 6-110 Dai3virakaramatsu
      Minamitsuru-gun Yamanashi 401-0511 (JP)**
   • **Nakashima, Yasuo
      Room 14-208 FANUC Manshonharimomi
      Minamitsuru-gun Yamanashi 401-0511 (JP)**

(74) Representative: **Billington, Lawrence Emlyn et al
      Haseltine Lake,
      Imperial House,
      15-19 Kingsway
      London WC2B 6UD (GB)**

(54) **Electric discharge apparatus**

(57)   An electric discharge machine capable of obtaining an average voltage between a workpiece and an electrode with a simple device. A voltage E is impressed between the electrode and the workpiece to cause an electric discharge to flow a machining current I for an on-time period $T_{ON}$, and after an off-time period $T_{OFF}$, the voltage E is impressed between the electrode and the workpiece again. The above cycle of the electric discharge is repeated to machine a workpiece. The on-time period $T_{ON}$ and the off-time period $T_{OFF}$ are of constant set values. The average voltage V is obtained according to the following equation using the number N of off-time periods or electric discharges in a set time period $T_A$.

$$V = \{(T_A - N \times (T_{ON} + T_{OFF}))/T_A\} \times E$$

Since $T_A$, $(T_{ON} + T_{OFF})$ and E are constant values, a value of the average voltage V is determined by counting the number N which is not so large, to make a counting device simple.

FIG. 2

EP 1 410 865 A2

**Description**

BACKGROUND OF THE INVENTION

1. Field of the Invention

The present invention relates to an electric discharge apparatus, and in particular to an electric discharge apparatus in which relative positions of an electrode and a workpiece are controlled in accordance with an average voltage between the electrode and the workpiece.

2. Description of Related Art

In an electric discharge apparatus, a voltage is impressed between an electrode and a workpiece to cause an electric discharge therebetween to machine the workpiece by an electric discharge current (machining current). The electrode is moved relatively to the workpiece in accordance with a status of a gap between the electrode and the workpiece to generate periodical electric discharges for removing a desired part of the workpiece. When an electric discharge is generated in impressing the voltage between the electrode and the workpiece, a machining current is flown for a predetermined time period and after a lapse of an off-time period the voltage is impressed again between the electrode and the workpiece. The above electric discharge cycle is repeatedly performed to machine the workpiece. Since a distance between the electrode and the workpiece increases as the machining part of the workpiece is removed by the electric discharge, the electrode is controlled to move relatively to the workpiece so that the gap is kept constant to secure stable electric discharges.

For the above control, there has been generally adopted a servo feed control in which an average voltage between the electrode and the workpiece is measured and the relative motion of the electrode and the workpiece is controlled so that the average voltage is kept constant for maintaining the gap between the electrode and the workpiece.

The electric discharge is generated not regularly but randomly so that a time period between impressing of the voltage and the generation of the electric discharge varies. Thus, the average voltage between the electrode and the workpiece varies in the machining. Measuring the average voltage by an analog system is appropriate but is liable to be influenced by state of machining fluid, machining trash caused by electric discharge and noises caused by the electric discharge.

In view of the above, there has been proposed a method of measuring the average voltage by a digital system. In this method, an average voltage is obtained by measuring the number of clock pulses in a time period in which the voltage between the electrode and the workpiece exceeds a threshold value within a set time period to obtain no-load voltage impressing time period, and the obtained no-load voltage impressing time period is divided by the set time period and multiplied by the impressed voltage to obtain the average voltage, as disclosed in JP 2-298426 A.

However, since high precision is required for measuring the no-load voltage impressing time period, a counter for counting the clock pulses has a capability of measuring 30 thousands of pulses at a maximum under the conditions that the set time period is 50ms, the clock period is 1 $\mu$s , a time period from impressing of a voltage to the next impressing of the machining voltage is 25$\mu$s, the average no-load voltage impressing time period is 15$\mu$s, for example. Further, in the case where a short clock period, e.g. 100ns is used for improving analysis ability, the counter is required to have a capability of measuring 300 thousands of pulses at a maximum. Therefore, the measuring device for measuring the average voltage is required to have high capability to increase a manufacturing cost of the electric discharge machine.

SUMMARY OF THE INVENTION

The present invention provides an electric discharge apparatus capable of measuring an average voltage between the electrode and the workpiece with a simple and small device.

According to one aspect of the present invention, an electric discharge apparatus comprises: a counting device for counting the number of off-time periods to be present after generation of respective electric discharges; a computing device for determining an average voltage between the electrode and the workpiece according to an equation given by

$$V = \{T_A - N \times T'_{OFF}\} / T_A\} \times E$$

where N denotes the number of off-time periods counted by the counting device in a set time period $T_A$, E denotes a voltage between the electrode and the workpiece in a period from impressing of the voltage to the generation of the electric discharge, and $T'_{OFF}$ denotes a sum of the off-time period and a time period in which a machining current flows, and for calculating a difference between the determined average voltage and a predetermined reference voltage; and a servo controller for controlling the relative position of the electrode and the workpiece such that the difference is minimized based on signals representing the difference from the computing means.

According to another aspect of the present invention, an electric discharge apparatus comprises: a counting device for counting the respective number of different off-time periods to be present after generation of respective electric discharges for every different off-time period; a computing device for determining an average voltage between the electrode and the workpiece according to an equation given by

$$V = \{(T_A - (N_1 \times T'_{OFF1} + N_2 \times T'_{OFF2} + ... + N_i \times T'_{OFFi}))/T_A \times E$$

where $N_1$, $N_2$, ..., $N_i$ (i: the number of different off-time periods) denote the respective number of different off-time periods counted by the counting device in a set time period $T_A$, E denotes a voltage between the electrode and the workpiece in a period from impressing of the voltage to the generation of the electric discharge, $T'_{OFF1}$, $T'_{OFF2}$, ..., $T'_{OFFi}$ denote respective sums of pairs of different off-time periods and different time periods in which machining currents flows, and for calculating a difference between the obtained average voltage and a predetermined reference voltage; and a servo controller for controlling the relative position of the electrode and the workpiece to eliminate the difference based on signals representing the difference from the computing means.

The above counting device may count the number of electric discharges as the number of off-time periods.

BRIEF DESCRIPTION OF THE DRAWINGS

FIG. 1 is a block diagram of an electric discharge machine according to an embodiment of the present invention;

FIG. 2 is a schematic diagram for showing calculation of an average voltage between an electrode and a workpiece according to the embodiment; and

FIG. 3 is a flowchart of processing of a servo feed control according to the embodiment.

DETAILED DESCRIPTION

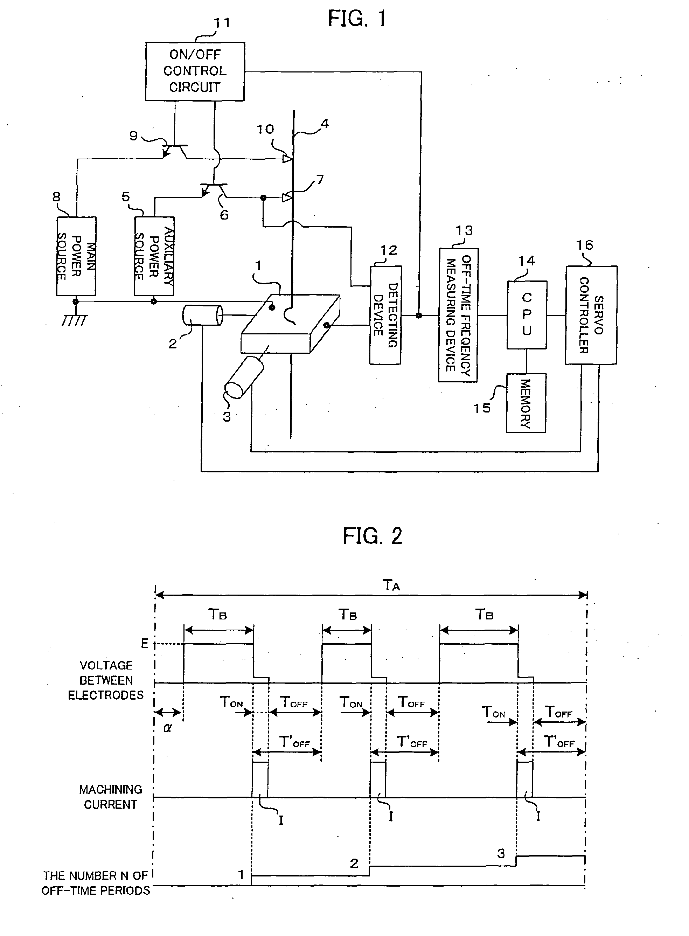

In an electric discharge machine as shown in FIG. 1, a workpiece 1 is mounted on a table (not shown) which is driven by servomotors 2 and 3 in X- and Y- directions perpendicular to each other so that the workpiece 1 is arranged movable in an X-Y plane. A wire electrode 4 is provided to extend in a direction perpendicular to the X-Y plane and is fed to run in the extending direction thereof. A main power source 8 and an auxiliary power source 5 are provided for impressing voltages between the wire electrode 4 and the workpiece 1. The auxiliary power source impresses a voltage for inducing an electric discharge between the wire electrode 4 and the workpiece 1 and the main power source 8 provides a flow of a machining current (electric discharge current) between the wire electrode 4 and the workpiece 1 after the electric discharge is induced. One end of the auxiliary power source 5 and one end of the main power source 8 are connected to the workpiece 1 and the other ends thereof are connected to the wire electrode 4 through switching elements (transistors) 6, 9, and contacts 7, 10, respectively.

The switching elements 6 and 9 are controlled by an ON/OFF control circuit 11. The switching element 6 is first turned "ON" to impress a voltage E for inducing an electric discharge between the wire electrode 4 and the workpiece 1 from the auxiliary power source 5. When the electric discharge is detected by a detecting device 12, as described later, the switching element 9 is turned "ON" to flow a machining current I between the wire electrode 4 and the workpiece 1 from the main power source 8 and at the same time the switching element 6 is turned "OFF" to stop the impressing of the voltage E from the auxiliary power source 5.

After flowing the machining current I for a predetermined on-time period $T_{ON}$, the switching element 9 is turned "OFF" and then after a predetermined off-time period $T_{OFF}$, the switching element 6 is turned "ON" again to impress the voltage E for inducing the electric current between the wire electrode 4 and the workpiece 1. The above one cycle of electric discharge is repeated to generate the periodical electric discharges between the wire electrode 4 and the workpiece 1 to machine the workpiece 1 under the control of the switching elements 6 and 9.

The detecting device 12 detects the electric discharge by detecting a trailing edge of the inducing voltage E impressed by the auxiliary power source 5, which suddenly reduces after generation of the electric discharge. A detection signal of the electric discharge from the detecting device 12 is inputted into an off-time frequency measuring device 13 so as to measure the number of the electric discharges. A start of an expanded off-time period is detected by the off-time frequency measuring device 13 as described later. A CPU 14 reads a measured value of the off-time frequency measuring device 13 at every set time period $T_A$ and resets the measured value and calculates an average voltage. The CPU 14 outputs motion commands for servomotors 2 and 3 to a servo controller 16 based on the obtained average voltage and set data (a reference voltage for the servo feed) stored in a memory 15. The servo controller 16 drives the servomotors 2 and 3 based on the motion commands to control the relative positions of the wire electrode 4 and the workpiece 1 to perform the servo feed for keeping the constant gap between the wire electrode 4 and the workpiece 1.

FIG. 2 shows the voltage between the wire electrode 4 and the workpiece 1 which functions as the other electrode impressed from the auxiliary power source 5 and the main power source 8, the machining current (electric discharge current), and the number of off-time periods counted by the off-time frequency measuring device 13.

The electric voltage E for inducing the electric discharge is impressed between the wire electrode 4 and the workpiece 1 from the auxiliary power source 5 and when an electric discharge is generated, the machining current I is flown from the main power source 8 for the on-time period $T_{ON}$ and after a lapse of the off-time period $T_{OFF}$, the inducing voltage E is impressed again between the electrodes. Assuming that N represents the number of off-time periods counted by the off-time frequency measuring device 13 in the set time period $T_A$ (N=3 in the example of FIG. 2) and $T_B$ represents a no-load voltage impressing time period from time of impressing the inducing voltage to time of generation of the electric discharge, "$T_A - N \times (T_{ON} + T_{OFF})$" expresses the sum of the integrated value of the no-load voltage impressing time periods $T_B$ and an indefinite time period $\alpha$ which is presented in dependence on beginning and termination of the set time period $T_A$.

Since the on-time period and the off-time period are set constants, $T'_{OFF} = T_{ON} + T_{OFF}$, which is referred to as an expanded off-time period, is constant.

In the case where the set time period $T_A$ begins in the midst of an off-time period TOFF as shown in FIG. 2, the indefinite time period $\alpha$ should be included in the sum of the off-time periods $T_{OFF}$ in the calculation of the average voltage, but is excluded in the sum of the off-time periods. In contrast, in the case where the set time period $T_A$ terminates in the midst of an off-time period $T_{OFF}$, the sum of the off-time periods $T_{OFF}$ is calculated longer than the actual length. However, by setting the set time period $T_A$ sufficiently longer so that the off-time frequency measuring device 13 measures sufficiently large number of off-time periods in the set time period $T_A$, the influence of the indefinite time period $\alpha$ on the calculation of the average voltage is reduced to be negligible. Thus, the average voltage V is well approximated according to the following equation (2).

$$V = \{(T_A - N \times (T_{ON} + T_{OFF})) / T_A\} \times E$$

$$= \{T_A - N \times T'_{OFF}\} / T_A\} \times E \qquad (2)$$

In the equation (2), $T_A$, $T'_{OFF}$ and E are constants which are set in advance. Since N represents the number of off time periods (the number of electric discharges) in the set time period $T_A$, the measured value is no so large. For example, the off-time frequency measuring device 13 is required to have ability of counting the clock pulses of two thousands at a maximum under the conditions that the set time period $T_A$ is 50ms, a time period from impressing of the inducing voltage to the next impressing of the inducing voltage is 25μs, the off-time period is 10μs.

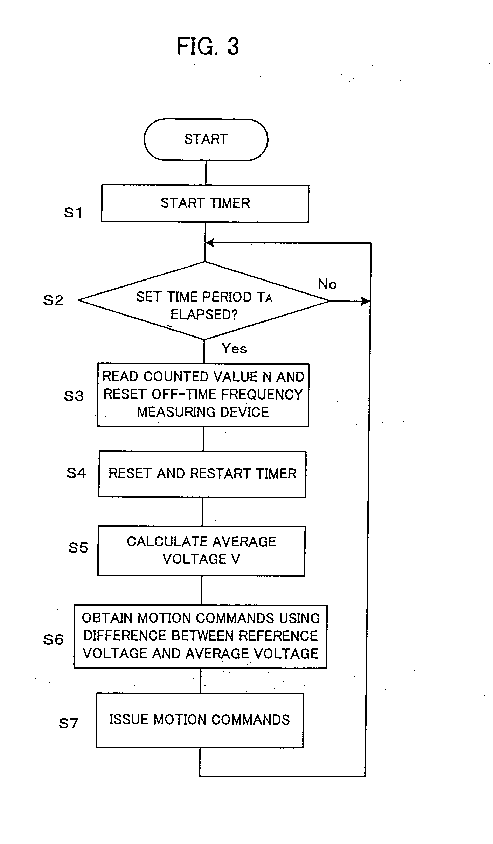

FIG. 3 shows processing of servo feed control to be executed by the CPU 14 according to the embodiment of the present invention.

When a command for servo feed is inputted, a timer for measuring the set time period $T_A$ is started (Step S1) and it is determined whether or not the set time period $T_A$ has been elapsed (Step S2) and if it is determined that the set time period $T_A$ has been elapsed, the counted value N of the off-time frequency measuring device 13 is read and the off-time frequency measuring device 13 is reset (Step S3), and also the timer is reset and restarted for measuring time (Step S4). A calculation according to the equation (2) is performed using the read counted N, the set time period $T_A$, the expanded off-time period $T'_{OFF}$ (= $T_{ON} + T_{OFF}$) and the voltage E of the auxiliary power source 5, so that the average voltage V is obtained (Step S5). Motion commands for servo feed are obtained based on a difference between the average voltage V and the reference voltage stored in the memory 15 (Step S6) and the obtained commands are issued to the servo controller 16 (Step S7). The servo controller 16 drives the servomotors 2 and 3 for the X-axis and the Y-axis, respectively, in accordance with the motion commands to move the workpiece 1 relatively to the wire electrode 4 such that the difference between the determined average voltage and the reference voltage is eliminated.

In the case where a plurality of different on-time periods $T_{ON}$ and a plurality of different off-time periods $T_{OFF}$ are used, the sum of expanded off-time periods $T'_{OFF}$ (=$T_{ON} + T_{OFF}$) is calculated for every pair of the different on-time period $T_{ON}$ and the different off-time period $T_{OFF}$ and the sums are added together to obtain the total sum of the expanded off-time periods $T'_{OFF1}$, $T'_{OFF2}$, ..., $T'_{OFFi}$ to obtain the average voltage V. This processing is expressed by the following equation (3).

$$V = \{(T_A - (N_1 \times T'_{OFF1} + N_2 \times T'_{OFF2} + ... + N_i \times T'_{OFFi}))/T_A \times E \qquad (3)$$

where "i" denotes the number of different expanded off-time periods $T'_{OFF}$ and $N_i$ denotes the number of i-th expanded off-time periods $T'_{OFFi}$.

In the foregoing embodiment, the electric discharge apparatus comprising the main power source 8 and the auxiliary power source 5. The present invention can be applied to an electric discharge machine comprising a single power source in which a voltage is impressed between the wire electrode 4 and the workpiece 1 from the single power source and the impressing of the voltage is stopped after a lapse of a predetermined on-time period $T_{ON}$ from generation of the electric discharge.

Further, in the foregoing embodiment, a voltage impressed between the wire electrode and the workpiece in the on-time periods $T_{ON}$ is neglected in the calculation of the average voltage. The average voltage may be calculated by taking account of the voltage in the on-time period $T_{ON}$.

According to the present invention, the average voltage can be easily detected by a relatively small and simple device to reduce the manufacturing cost of the electric discharge machine.

## Claims

1. An electric discharge apparatus for machining a workpiece by generating periodical electric discharges between an electrode and the workpiece and controlling a relative position of the electrode and the workpiece in accordance with a status of the periodical electric discharges, comprising:

    a counting device for counting the number of off-time periods to be present after generation of respective electric discharges;

    a computing device for determining an average voltage between the electrode and the workpiece according to an equation given by

$$V = \{T_A - N \times T'_{OFF}\} / T_A\} \times E$$

    where N denotes the number of off-time periods counted by said counting device in a set time period $T_A$, E denotes a voltage between the electrode and the workpiece in a period from impressing of the voltage to the generation of the electric discharge, and $T'_{OFF}$ denotes a sum of the off-time period and a time period in which a machining current flows, and for calculating a difference between the determined average voltage and a predetermined reference voltage; and
    a servo controller for controlling the relative position of the electrode and the workpiece such that the difference is minimized based on signals representing the difference from said computing means.

2. An electric discharge apparatus according to claim 1, wherein said counting device counts the number of electric discharges as the number of off-time periods.

3. An electric discharge apparatus for machining a workpiece by generating periodical electric discharges between an electrode and the workpiece and controlling a relative position of the electrode and the workpiece in accordance with a status of the periodical electric discharges, comprising:

    a counting device for counting the respective number of different off-time periods to be present after generation of respective electric discharges for every different off-time period;

    a computing device for determining an average voltage between the electrode and the workpiece according to an equation given by

$$V = \{(T_A - (N_1 \times T'_{OFF1} + N_2 \times T'_{OFF2} + ... + N_i \times T'_{OFFi}))/T_A \times E$$

where $N_1$, $N_2$, ..., $N_i$ (i: the number of different off-time periods) denote the respective number of different off-time periods counted by said counting device in a set time period $T_A$, E denotes a voltage between the electrode and the workpiece in a period from impressing of the voltage to the generation of the electric discharge, $T'_{OFF1}$, $T'_{OFF2}$, ..., $T'_{OFFi}$ denote respective sums of pairs of different off-time periods and different time periods in which machining currents flows, and for calculating a difference between the obtained average voltage and a predetermined reference voltage; and

a servo controller for controlling the relative position of the electrode and the workpiece to eliminate the difference based on signals representing the difference from said computing means.

4. An electric discharge apparatus according to claim 3, wherein said counting device counts the number of electric discharges as the number of off-time periods.

# FIG. 1

# FIG. 2

## FIG. 3

```
                    ┌─────────────┐
                    │    START    │
                    └─────────────┘
                           │
           ┌───────────────────────────────┐
    S1     │         START TIMER           │
           └───────────────────────────────┘
                           │
                           ▼◄──────────────────────┐
                                                    │
                          ╱╲                        │
                        ╱    ╲              No       │
    S2              ╱  SET TIME PERIOD TA  ╲─────────┤
                    ╲    ELAPSED?          ╱         │
                      ╲                  ╱           │
                        ╲╱                           │
                           │ Yes                     │
           ┌───────────────────────────────┐        │
           │ READ COUNTED VALUE N AND       │        │
    S3     │ RESET OFF-TIME FREQUENCY       │        │
           │ MEASURING DEVICE               │        │
           └───────────────────────────────┘        │
                           │                         │
           ┌───────────────────────────────┐        │
    S4     │     RESET AND RESTART TIMER    │        │
           └───────────────────────────────┘        │
                           │                         │
           ┌───────────────────────────────┐        │
    S5     │     CALCULATE AVERAGE          │        │
           │     VOLTAGE V                  │        │
           └───────────────────────────────┘        │
                           │                         │
           ┌───────────────────────────────┐        │
           │ OBTAIN MOTION COMMANDS USING   │        │
    S6     │ DIFFERENCE BETWEEN REFERENCE   │        │
           │ VOLTAGE AND AVERAGE VOLTAGE    │        │
           └───────────────────────────────┘        │
                           │                         │
           ┌───────────────────────────────┐        │
    S7     │     ISSUE MOTION COMMANDS      │        │
           └───────────────────────────────┘        │
                           │                         │
                           └─────────────────────────┘
```